# EUROPÄISCHE PATENTANMELDUNG

(11) **EP 4 123 052 A1**
(43) Veröffentlichungstag der Anmeldung: **25.01.2023**
(21) Anmeldenummer: 21186286.7
(22) Anmeldetag: 19.07.2021
(51) Int. Cl.: C25B 1/04, C25B 9/17, C25B 15/023, C25B 15/08

(54) **VERFAHREN ZUM BETRIEB EINER ELEKTROLYSEANLAGE UND ELEKTROLYSEANLAGE**

(71) Anmelder: Siemens Energy Global GmbH & Co. KG, 81739 München (DE)
(72) Erfinder: Choi, Du-Fhan, 40235 Düsseldorf (DE); Ungerer, Markus, 91083 Baiersdorf (DE); Wall, Dirk, 45473 Mülheim (DE); Wolf, Erik, 91341 Röttenbach (DE)

(57) **Zusammenfassung**

Die Erfindung betrifft ein Verfahren zum Betrieb einer Elektrolyseanlage (100) zur Erzeugung von Wasserstoff und Sauerstoff als Produktgase, bei dem das Wasserstoff-Produktgas aus einem Elektrolyseur (1), welches auch Sauerstoff als Fremdgas enthält, einem nachgeschalteten Gas-Separator (3) zugeführt wird, wobei bei Überschreiten eines vorbestimmten Grenzwerts für die Sauerstoffkonzentration im Wasserstoff-Produktgas dem Gas-Separator (3) Wasserstoff mit einer geringen Sauerstoffkonzentration zugeführt wird, so dass die Sauerstoffkonzentration im Wasserstoff-Produktgas abgesenkt wird.

Die Erfindung betrifft weiterhin eine entsprechende Elektrolyseanlage (100).

## Beschreibung

Die Erfindung betrifft ein Verfahren zum Betrieb einer Elektrolyseanlage umfassend einen Elektrolyseur zur Erzeugung von Wasserstoff und Sauerstoff als Produktgase. Die Erfindung betrifft weiterhin eine solche Elektrolyseanlage.

Wasserstoff wird heutzutage beispielsweise mittels Proton Exchange Membrane (PEM)-Elektrolyse oder alkalischer Elektrolyse erzeugt. Die Elektrolyseure produzieren mit Hilfe elektrischer Energie Wasserstoff und Sauerstoff aus dem zugeführten Wasser.

Ein Elektrolyseur weist dabei in der Regel eine Vielzahl von Elektrolysezellen auf, welche benachbart zueinander angeordnet sind. Mittels der Wasserelektrolyse wird in den Elektrolysezellen Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Das Wasser wird dabei in der Regel von einer Unterseite in den Anodenraum und/oder Kathodenraum gefördert.

Dieser Elektrolyseprozess findet in dem so genannten Elektrolysestack, zusammengesetzt aus mehreren Elektrolysezellen, statt. In dem unter DC Spannung stehenden Elektrolysestack wird als Edukt Wasser eingebracht, wobei nach dem Durchlauf durch die Elektrolysezellen zwei Fluidströme, bestehend aus Wasser und Gasblasen (Sauerstoff O₂ bzw. Wasserstoff H₂) austreten.

In der Praxis befinden sich im Sauerstoffgasstrom dabei kleine Mengen an Wasserstoff und im Wasserstoffgasstrom kleine Mengen an Sauerstoff. Die Quantität des jeweiligen Fremdgases hängt vom Elektrolyse-Zelldesign ab und variiert auch unter dem Einfluss von Stromdichte, Katalysatorzusammensetzung, Alterung und hängt bei einer PEM-Elektrolyseanlage vom Membranmaterial ab. Systemimmanent ist dabei, dass im Gasstrom des einen Produktgases jeweils das andere Produktgas in sehr geringen Mengen vorliegt. Im weiteren Prozessverlauf werden in der Regel in nachgeschalteten Schritten der Gasreinigung selbst geringe Sauerstoffspuren aus dem Wasserstoff mit zum Teil sehr aufwändigen und kostenintensiven Reinigungsschritten entfernt, insbesondere wenn eine besonders hohe Produktgasqualität gefordert ist, wie dies etwa bei der Nutzung des Wasserstoffs z.B. für Brennstoffzellen der Fall ist.

Beispielsweise können in einer Elektrolyseanlage zur Gasreinigung der Produktgasströme aus dem Elektrolyseur insbesondere beide Produktgasströme einem jeweiligen, katalytisch aktivierten Rekombinator zugeführt werden, in dem ein Katalysator den Wasserstoff mit dem Sauerstoff zu Wasser rekombinieren lässt (DeOxo-Einheit). Dazu muss der Gasstrom zuvor auf mindestens 80°C aufgeheizt werden, damit die Umsatzraten des Rekombinators ausreichend hoch sind und somit die geforderte Gasreinheit erreicht wird. Die dafür genutzte verfahrenstechnische Anlage ist jedoch teuer und reduziert auf Grund ihres Energiebedarfs den Systemwirkungsgrad der gesamten Elektrolyseanlage. Deswegen ist bereits auf die Reinheit und Qualität der im Elektrolyseur zunächst entstehenden und aus dem Elektrolyseur abgeführten Produktgasströme zu achten, auch um neben Betriebssicherheitsaspekten auch die Kosten und Aufwand für die nachfolgenden Reinigungsschritte noch in vertretbarem Rahmen zu halten.

Die Reinheit bzw. Qualität der Produktgasströme der ursprünglich im Elektrolyseur produzierten Gase ist dabei von vielen Parametern abhängig und kann sich auch im Laufe des Betriebs einer Elektrolyseanlage ändern. Problematisch ist hierbei, wenn die Konzentration von Sauerstoff in Wasserstoff sich erhöht. Wird hier ein bestimmtes Konzentrationslimit überschritten, vor allem im Gasseparator (Behälter) unmittelbar stromab der Elektrolyse, so kann das produzierte Wasserstoffgas nicht mehr für weitere Zwecke übergeben werden. Steigt der Anteil von Sauerstoff weiter, dann kann sogar ein brennbares bzw. explosives Gemisch entstehen. Dann herrscht in dem Gasseparator (Behälter) ein potenziell gefährlicher Betriebszustand, den es aus Sicherheitsgründen unbedingt zu vermeiden gilt.

Eine zuverlässige und kontinuierliche Überwachung der Gasqualität im Betrieb auf der Wasserstoffseite, d.h. die Überwachung der Konzentration von Sauerstoff als Fremdgas in dem produzierten Wasserstoff bereits vor einer nachgeschalteten aufwändigen Gasreinigungsanlage (DeOxo-Einheit) ist hier eine wichtige Schutzmaßvorkehrung, um kritische Betriebszustände zu erkennen und um Sicherheitsmaßnahmen bis hin zum Abschalten der Anlage zu ergreifen.

Der Erfindung liegt daher die Aufgabe zugrunde bei einer Elektrolyseanlage einen hinsichtlich Sicherheit und Anlageneffizienz verbesserten Betrieb zu ermöglichen.

Die Aufgabe wird erfindungsgemäß gelöst durch ein Verfahren zum Betrieb einer Elektrolyseanlage zur Erzeugung von Wasserstoff und Sauerstoff als Produktgase, bei dem das Wasserstoff-Produktgas aus einem Elektrolyseur, welches auch Sauerstoff als Fremdgas enthält, einem nachgeschalteten Gas-Separator zugeführt wird, wobei bei Überschreiten eines vorbestimmten Grenzwerts für die Sauerstoffkonzentration im Wasserstoff-Produktgas dem Gas-Separator Wasserstoff mit einer geringen Sauerstoffkonzentration zugeführt wird, so dass die Sauerstoffkonzentration im Wasserstoff-Produktgas abgesenkt wird.

Die Aufgabe wird weiterhin erfindungsgemäß gelöst durch eine Elektrolyseanlage umfassend einen Elektrolyseur zur Erzeugung von Wasserstoff und Sauerstoff als Produktgase, bei dem das Wasserstoff-Produktgas auch Sauerstoff als Fremdgas enthält, bei der der Elektrolyseur über eine Produktstrom-Leitung für das Wasserstoff-Produktgas an einen Gas-Separator angeschlossen ist und der Gas-Separator über eine Zufuhrleitung an einen Puffertank, wobei der Puffertank zur bedarfsweisen Zufuhr von Wasserstoff mit einer geringen Sauerstoffkonzentration zu dem Gas-Separator ausgestaltet ist.

Die in Bezug auf das Verfahren nachstehend angeführten Vorteile und bevorzugten Ausgestaltungen lassen sich sinngemäß auf die Elektrolyseanlage übertragen.

Die Erfindung geht dabei bereits von der Erkenntnis aus, dass bisherige Betriebskonzepte für Elektrolyseanlagen hinsichtlich der Überwachung und Behebung der kritischer Betriebszustände in Bezug auf die Qualität des erzeugten Wasserstoffs aufwändig sind und wirtschaftlich von erheblichem Nachteil.

Für eine Qualitätsmessung wird in bisherigen Betriebskonzepten üblicherweise die Konzentration von Sauerstoff im Wasserstoff-Produktgas im Gas-Separator gemessen und überwacht. Überschreitet die Konzentration einen vorbestimmten Grenzwert, so wird der Betrieb des Elektrolyseurs angehalten und das gesamte Wasserstoff-Produktgas im Gas-Separator verworfen. Das Wasserstoff-Produktgas wird aus dem Behältervolumen des Gas-Separators und eventuellen Zuleitungen des wasserstoffseitigen Gassystems vollständig abgelassen. Hierzu wird der Gas-Separator vollständig entlüftet. Das gesamte Gassystem inklusive Gas-Separator wird anschließend durch eine aufwändige Spülprozedur zur Inertisierung mit Stickstoff aus einem Speicherbehälter im Stickstoff-System der Elektrolyseanlage gespült. Das Stickstoff-System muss für diesen sicherheitsrelevanten Bedarf an Stickstoff entsprechend großvolumig ausgelegt werden, um ausreichend Stickstoff vorzuhalten. Nachdem die Ursache für die kritische Qualität des Wasserstoff-Produktgases behoben ist, wird die Elektrolyse wieder gestartet. Durch das Inertgas Stickstoff im Gassystem muss zunächst auch das neu produzierte Wasserstoff-Produktgas verworfen werden, und zwar solange, bis die gewünschte Gasqualität wieder erreicht ist. Es ist also neben dem Vorhalten eines großvolumigen Stickstoff-Inertisierungssystem und Stickstoffbevorratung gerade auch das Verwerfen des erzeugten Wasserstoff-Produktgases unter wirtschaftlichen Gesichtspunkten besonders nachteilig.

Hier setzt die vorliegende Erfindung gezielt an, indem eine kritische Fremdgaskonzentration an Sauerstoff im Wasserstoff-Produktgas in dem dem Elektrolyseur nachgeschalteten GasSeparator dadurch reduziert wird, dass dem Wasserstoff-Produktgas Wasserstoff besserer Qualität, das heißt mit einer geringen Sauerstoffkonzentration in gezielter und wohldosierter Weise zugeführt wird. Die Zufuhr bewirkt im Gas-Separator eine Mischung der Gase, wodurch eine Absenkung der Sauerstoffkonzentration erzielt wird. Die Sauerstoffkonzentration reduziert sich allein schon aufgrund des Effekts der Gasmischung und der Verdünnung des Sauerstoffs im Wasserstoff-Produktgas, der bei der Erfindung besonders vorteilhaft ausgenutzt wird. Somit ist ein Verwerfen des Wasserstoff-Produktgases im Gas-Separator vermieden, da es bei der hier vorgeschlagenen Prozedur in diesem Behälter verbleibt. Das Gasvolumen kann daher beim Wiederanfahren des Elektrolyseurs verwendet werden. Die Wasserstoffausbeute der Elektrolyseanlage erhöht sich, da praktisch kein bereits erzeugter hochwertiger Wasserstoff verworfen wird. Ebenso kann die aufwändige und vollständige Inertisierung des Gassystems, insbesondere des Gas-Separators, mit Stickstoff entfallen und ein noch erforderliches Stickstoff-System an der Elektrolyseanlage entsprechend kleiner dimensioniert werden.

In einer besonders vorteilhaften Ausgestaltung des Verfahrens wird der Druck in dem Gas-Separator derart abgesenkt, dass aufgrund einer dadurch erzielten Druckdifferenz Wasserstoff mit einer geringen Sauerstoffkonzentration in den Gas-Separator einströmt. Dadurch ist eine Zufuhr von Wasserstoff guter Qualität und Reinheit in den Gas-Separator auf besonders einfache Weise erzielt. Eine Druckdifferenz kann bevorzugt etwa durch partielles und nur geringfügiges Ablassen von Wasserstoff-Produktgas in dem Gas-Separator erzeugt werden. Alternativ ist es auch möglich, durch Einstellen eines entsprechenden höheren Druckniveaus des zugeführten Wasserstoffs eine Strömung in den Gas-Separator zur Verdünnung zu erreichen.

Vorteilhafterweise wird die Sauerstoffkonzentration in dem Gas-Separator gemessen. Die Messung und Überwachung der Sauerstoffkonzentration wird unter Anwendung entsprechend sensitiver Gassensoren durchgeführt, wobei bevorzugt auch Überwachungs- und Kontrolleinheiten für eine selektive Gas-Sensorik zur Anwendung kommen, um die Sauerstoffkonzentration im Wasserstoff-Produktgas zuverlässig "in-situ" zu bestimmen und zu überwachen. Dies gilt einerseits für den regulären Betrieb der Elektrolyseanlage, aber vorteilhafterweise auch während des Verfahrens des Absenkens der Sauerstoffkonzentration im Wasserstoff-Produktgas unter den gewünschten vorbestimmten, kritischen Grenzwert.

In besonders vorteilhafter Ausgestaltung des Verfahrens wird der Wasserstoff mit geringer Sauerstoffkonzentration bedarfsweise einem Puffertank entnommen. Somit ist erreicht, dass nur im Bedarfsfall eine Zufuhr von Wasserstoff zur Verdünnung und Absenkung der Sauerstoffkonzentration vorgenommen wird. Der Puffertank ist dabei mit Wasserstoff-Produktgas guter Qualität, das heißt mit geringer oder sehr geringer Fremdgaskonzentration an Sauerstoff beladen. In dem Puffertank wird ein entsprechenden Gasvorrat gespeichert bzw. vorgehalten. Der Puffertank ist als Behälter ausgebildet, der hinsichtlich Volumen entsprechend bedarfsgerecht ausgelegt und konstruktiv angepasst ist. Der Puffertank wird vorteilhafterweise im Normalbetrieb des Elektrolyseurs, das heißt bei der elektrochemischen Zerlegung von Wasser in Wasserstoff und Sauerstoff, mit Wasserstoff-Produktgas beladen, so dass ein Gasvorrat an Wasserstoff-Produktgas mit guter Qualität im Puffertank vorgehalten wird. Es ist auch möglich, dass im Normalbetrieb des Elektrolyseurs der Puffertank kontinuierlich durchströmt werden, so dass jederzeit ein Volumen zur Verfügung steht, sollte die Gasqualität sich über den kritischen Wert einer noch tolerierbaren Sauerstoffkonzentration verschlechtern.

Vorteilhafterweise wird somit dem Puffertank Wasserstoff-Produktgas mit einer Sauerstoffkonzentration unterhalb des vorbestimmten Grenzwerts für die Sauerstoff-Konzentration zugeführt. Dabei wird vorzugsweise dem Puffertank Wasserstoff-Produktgas aus dem Gas-Separator zugeführt. Wie beschrieben, ist es im Normalbetrieb des Elektrolyseurs möglich und vorteilhaft, den Puffertank mit Wasserstoff-Produktgas guter Qualität, d.h. mit geringer Sauerstoffkonzentration, zu beladen.

Vorteilhafterweise erfolgt die Einbindung eines Puffertanks stromab des Gas-Separators in das Betriebskonzept der Elektrolyseanlage. Dieser Puffertank steht üblicherweise unter einem Druck und enthält Wasserstoff mit einer guten Qualität.

Indiziert nun Qualitätsmessung im Gas-Separator eine schlechte Qualität, wird der Elektrolyseprozess angehalten. Anstatt nun das Gas im Gas-Separator zu verwerfen, wird der Druck im Separator nur soweit abgesenkt, dass aus dem Puffertank wieder sauberes Gas dem Gas-Separator zugeführt wird. Es wird solange sauberes Wasserstoffgas dem Gas-Separator zugeführt, bis die Gasqualität ausreichend ist, das heißt die Sauerstoffkonzentration ist kleiner als der vorbestimmte Grenzwert.

In einer weiterhin besonders bevorzugten Ausführungsform des Verfahrens wird Wasserstoff hoher Reinheit aus einem zweiten Puffertank entnommen und dem Gas-Separator zugeführt.

Wasserstoff hoher Reinheit bedeutet in diesem Zusammenhang, dass die Fremdgasverunreinigung mit Sauerstoff des in dem zweiten Puffertank gespeicherten Wasserstoffs noch geringer ist als die Gasqualität des Wasserstoff-Produktgases in dem Gas-Separator. Von besonderem Vorteil erweist sich hier, dass zur angestrebten Verdünnung und damit Qualitätsverbesserung des Wasserstoff-Produktgases eine im Vergleich zur Zufuhr aus dem Puffertank geringere Menge an Wasserstoff hoher Reinheit zugeführt werden muss. Es wird ein geringeres Gasvolumen benötigt. Dabei ist die jeweilige Wasserstoffentnahme und jeweilige Zufuhr aus dem Puffertank und dem zweiten Puffertank auch flexibel kombinierbar.

In bevorzugter Ausgestaltung wird dabei Wasserstoff mit geringer Sauerstoffkonzentration aus dem Puffertank einem Rekombinator zugeführt wird, der einen Katalysator enthält, so dass der Sauerstoff mit dem Wasserstoff zu Wasser rekombiniert, wobei Wasserstoff hoher Reinheit gewonnen wird, mit dem der zweite Puffertank beladen wird. Der Wasserstoff hoher Reinheit, das heißt mit einer allenfalls noch sehr geringen Fremdgaskonzentration an Sauerstoff oder aus praktischer Sicht mit keiner nennenswerten Sauerstoffkonzentration, wird somit auf vorteilhafte Weise im Betrieb der Elektrolyseanlage selbst gewonnen. Durch den vorteilhaften katalytischen Gasreinigungsschritt ist die Gasqualität in dem zweiten Puffertank sehr gut und nochmals deutlich besser als in dem Puffertank.

In bevorzugter Ausgestaltung wird die Erzeugung von Wasserstoff und Sauerstoff in dem Elektrolyseur angehalten. Der Normalbetrieb wird also vorteilhafterweise nur so lange unterbrochen, bis durch die Zufuhr von katalytisch gereinigtem Wasserstoff hoher Reinheit aus dem zweiten Puffertank, oder Wasserstoff-Produktgas mit einer geringen Sauerstoffkonzentration aus dem Puffertank, in den Gas-Separator zur Verdünnung und Absenkung der Sauerstoffkonzentration unter den Grenzwert erreicht ist. Dadurch ist die benötigte Wartungszeit mit einhergehendem Betriebsstillstand des Elektrolyseurs für das Verfahren gemäß der Erfindung vorteilhafterweise erheblich reduziert gegenüber den herkömmlichen Verfahren. Bei diesen erfolgt ein vollständiges Ablassen des Wasserstoff-Produktgases, wobei der Gas-Separator entleert wird und anschließend das Gassystem mit Stickstoff vollständig inertisiert wird und schließlich die Elektrolyseanlage wieder angefahren wird bis zum Erreichen bzw. Wiederaufnahme eines Normalbetriebszustands des Elektrolyseurs.

Die Elektrolyseanlage gemäß der Erfindung umfasst einen Elektrolyseur zur Erzeugung von Wasserstoff und Sauerstoff als Produktgase, bei dem das Wasserstoff-Produktgas auch Sauerstoff als Fremdgas enthält, wobei der Elektrolyseur über eine Produktstrom-Leitung für das Wasserstoff-Produktgas an einen Gas-Separator angeschlossen ist und der Gas-Separator über eine Zufuhrleitung an einen Puffertank, der zur bedarfsweisen Zufuhr von Wasserstoff mit einer geringen Sauerstoffkonzentration zu dem Gas-Separator ausgestaltet ist.

Der Puffertank ist vorzugsweise als Behälter ausgeführt und, wie oben bei dem Verfahren näher ausgeführt, mit Wasserstoff enthaltend eine geringe Konzentration an Sauerstoff als Fremdgas beaufschlagbar und damit füllbar. Der Puffertank dient vorteilhafterweise als Wasserstoff-Produktgasspeicher mit entsprechender Gasqualität. Durch die Zufuhrleitung ist Wasserstoff guter Qualität aus dem Puffertank in den GasSeparator zuführbar.

Dabei ist bevorzugt in die Zufuhrleitung ein Ventil geschaltet, dass insbesondere als ein Regelventil ausgestaltet ist. Die Ausgestaltung des Ventils als Regelarmatur gestattet eine genaue Dosierung der Gaszufuhr zum Gas-Separator. Die Ventilposition des Regelventils kann vorteilhafterweise mit einer hydraulischen oder elektromechanischen Ventilsteuerung oder Ventil-Regeleinrichtung angesteuert werden.

In bevorzugter Ausgestaltung ist eine ein Absperrventil aufweisende Bypassleitung vorgesehen, die von der Zufuhrleitung abzweigt und strömungstechnisch parallel der Zufuhrleitung derart geschaltet ist, dass die Bypassleitung das Ventil, insbesondere das Regelventil, umgeht.

Dabei kann bevorzugt das Ventil als ein in beide Richtungen durchströmbares Regelventil ausgestaltet ist. Die bidirektionale Ausführung des Regelventils erlaubt eine besonders flexible Betriebsweise und Betriebsartwechsel mit einer Beladung des Puffertanks einerseits, beispielsweise im Normalbetrieb des Elektrolyseurs, bei dem Wasserstoff-Produktgas dem Puffertank zuführbar und dieser beladbar ist. Andererseits ist bedarfsweise im Abschaltbetrieb des Elektrolyseurs dem GasSeparator Wasserstoff-Produktgas in der Gegenrichtung zuführbar. Durch diese Ausführung ist beispielsweise auf eine sprunghafte, graduelle, einmalige oder anhaltende Änderung der Gasqualität des Wasserstoff-Produktgases im Gas-Separator flexibel reagierbar.

In besonders bevorzugter Ausgestaltung der Elektrolyseanlage weist diese einen zweiten Puffertank auf, der über eine Leitung mit dem Puffertank verbunden ist, wobei in die Leitung ein Rekombinator geschaltet ist, der einen Katalysator enthält, so dass der Sauerstoff mit dem Wasserstoff zu Wasser rekombinierbar und Wasserstoff hoher Reinheit zur Beladung des zweiten Puffertanks gewinnbar ist.

Der zweite Puffertank ist vorzugsweise über eine Zufuhrleitung an den Gas-Separator angeschlossen, so dass bedarfsweise eine Zufuhr von Wasserstoff hoher Reinheit aus dem zweiten Puffertank zu dem Gas-Separator erzielbar ist. In die Zufuhrleitung ist ein Ventil geschaltet ist, das insbesondere als Regelventil ausgestaltet ist, bevorzugt ist dieses zum bidirektionalen Betrieb ausgestaltet. Diese Ausgestaltung dient der präzisen Dosierung von gereinigtem Wasserstoff-Produktgas aufweisend eine hohe Qualität und Reinheit und der kontrollierten Zufuhr in den Gas-Separator über die Zufuhrleitung.

Ausführungsbeispiele der Erfindung werden anhand einer Zeichnung näher erläutert. Hierin zeigen schematisch und stark vereinfacht:
- FIG 1: eine Elektrolyseanlage mit Stickstoff-System zur Inertisierung,
- FIG 2: eine Elektrolyseanlage mit Wasserstoff-Puffertank gemäß der Erfindung,
- FIG 3: ein weiteres Ausführungsbeispiel einer Elektrolyseanlage mit Puffertank gemäß der Erfindung,
- FIG 4: ein weiteres Ausführungsbeispiel einer Elektrolyseanlage mit einer Gasreinigung und einem weiteren Puffertank.

Gleiche Bezugszeichen haben in den Figuren die gleiche Bedeutung.

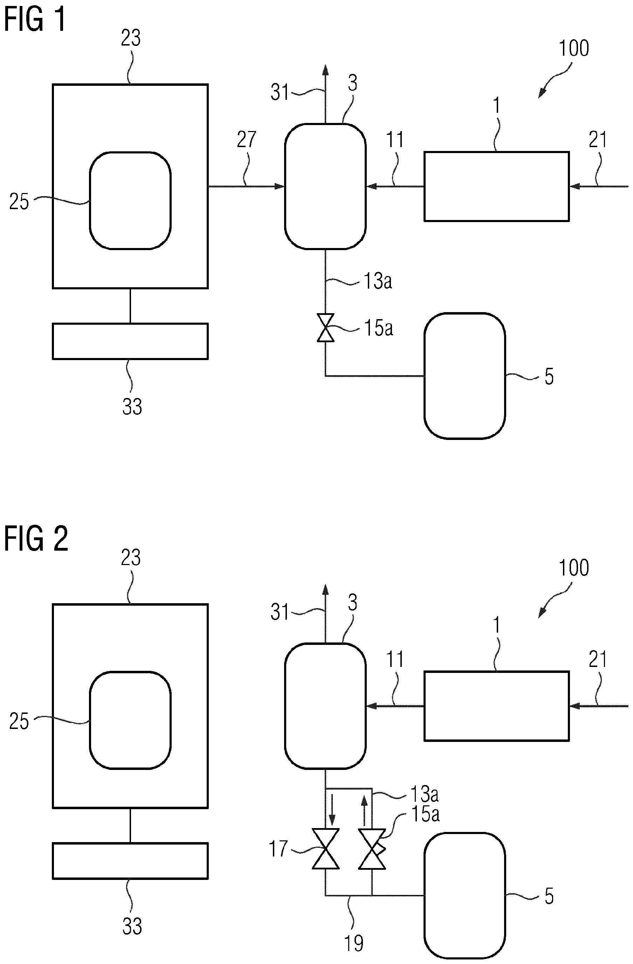

In FIG 1 ist eine Elektrolyseanlage 100 in einem stark vereinfachten Ausschnitt von Anlagenteilen dargestellt. Die Elektrolyseanlage 100 weist einen Elektrolyseur 1 auf, der aus einem PEM- oder Alkali-Elektrolyseur ausgeführt ist. Der Elektrolyseur 4 umfasst mindestens eine hier nicht näher gezeigte Elektrolysezelle zum elektrochemischen Zerlegen von Wasser. Die Elektrolyseanlage 100 weist zudem ein Stickstoff-System 23 auf, das einen Stickstoff-Behälter 25 umfasst. Ein Verdichter 33 ist an das Stickstoff-System 23 angeschlossen, um das Stickstoff-System 23 zu versorgen. Über eine Spülleitung 27 ist das Stickstoff-System 23 an einen Gas-Separator 3 angeschlossen, so dass bei Bedarf Stickstoff zur Spülung des Gas-Separators 3 dem Stickstoff-Behälter 25 entnommen und dem Gas-Separator 3 zuführbar ist (Stickstoff-Inertisierung). Der Stickstoff-Behälter 25 ist für den Bedarf an Stickstoff in der Elektrolyseanlage 100 entsprechend großvolumig dimensioniert und druckbeaufschlagt. Für eine Inertisierung sind - neben anderen Aufgaben - bedarfsweise große Mengen an Stickstoff erforderlich, die in dem Stickstoff-Behälter 25 vorzuhalten sind.

Im Elektrolyseur 1 wird über eine Eduktstrom-Leitung 21 ein Eduktstrom aus Wasser eingeführt. Das Wasser wird im Elektrolyseur 1 in die Produktgase Wasserstoff und Sauerstoff elektrochemisch zerlegt und beide Produktströme werden separat aus dem Elektrolyseur 1 hinausgeleitet. Für die Hinausleitung des Wasserstoff-Produktstroms weist der Elektrolyseur 1 eine Produktstrom-Leitung 11 auf, mit deren Hilfe ein erstes Produkt, hier Wasserstoff, hinausgeführt wird. Der hier beschriebene Aufbau der Elektrolyseanlage 100 bezieht sich auf den Wasserstoff-Produktstrom. Sauerstoffseitig kann jedoch ein ähnlicher anlagentechnischer Aufbau in der Elektrolyseanlage 100 vorliegen, was in der FIG 1 aus Übersichtsgründen nicht näher gezeigt und ausgeführt ist. Der Elektrolyseur 1 ist über die Produktstrom-Leitung 11 an einen Gas-Separator 3 angeschlossen. An den Gas-Separator 3 ist eine Entlüftungsleitung 31 angeschlossen, über die der Gas-Separator 3 entleert werden kann. Weiterhin ist an den Gas-Separator 3 ein Puffertank 5 über eine Zufuhrleitung 13a angeschlossen, in der ein Ventil 15a angeordnet ist. Dem Puffertank 5 ist Wasserstoff-Produktgas aus der Elektrolyse über die Zufuhrleitung 13a von dem Gas-Separator 3 zuführbar. Der Puffertank 5 wird auf diese Weise mit Wasserstoff-Produktgas beladen für weitere Zwecke, insbesondere eine Gasreinigung.

Im Betrieb des Elektrolyseurs 1 im Anlagenkonzept der FIG 1 wird Wasserstoff-Produktgas dem Gas-Separator 3 zugeführt. Für eine Qualitätsmessung des Wasserstoff-Produktgases wird in diesem Betriebskonzepten die Konzentration von Sauerstoff im Wasserstoff-Produktgas im Gas-Separator 3 gemessen und überwacht. Überschreitet die Konzentration einen vorbestimmten Grenzwert, so wird der Betrieb des Elektrolyseurs 1 angehalten und das gesamte Wasserstoff-Produktgas im GasSeparator verworfen. Das Wasserstoff-Produktgas wird aus dem Behältervolumen des Gas-Separators 3 und eventuellen Zuleitungen des wasserstoffseitigen Gassystems vollständig abgelassen. Hierzu wird der Gas-Separator 3 vollständig über die Entlüftungsleitung 31 entlüftet. Das gesamte Gassystem inklusive Gas-Separator 3 wird anschließend durch eine aufwändige Spülprozedur zur Inertisierung mit Stickstoff aus einem Stickstoff-Behälter 25 im Stickstoff-System 23 der Elektrolyseanlage 100 gespült. Das Stickstoff-System 23 muss für diesen sicherheitsrelevanten Bedarf an Stickstoff entsprechend großvolumig ausgelegt werden, um ausreichend Stickstoff vorzuhalten. Nachdem die Ursache für die kritische Qualität des Wasserstoff-Produktgases behoben ist, wird die Elektrolyse wieder gestartet. Durch das Inertgas Stickstoff im Gassystem und insbesondere in dem Gas-Separator 3 muss zunächst auch das neu produzierte Wasserstoff-Produktgas verworfen werden, und zwar solange, bis die gewünschte Gasqualität wieder erreicht ist. Es ist also neben dem Vorhalten eines großvolumigen Stickstoff-Inertisierungssystems und ausreichender Stickstoffbevorratung gerade auch das Verwerfen des erzeugten Wasserstoff-Produktgases wirtschaftlichen Gesichtspunkten besonders nachteilig.

Hier setzt das neue Betriebskonzept der Erfindung an mit einer vorteilhaften Einbindung des Puffertanks 3 stromab des Gas-Separators 3, wie in FIG 2 nachstehend näher erläutert wird. Dabei entfällt gegenüber der Ausgestaltung der Elektrolyseanlage 100 gemäß der FIG 1 die Verbindung des Stickstoff-Systems 23 mit dem Gas-Separator 3 über die Spülleitung 27 zur Inertisierung mit Stickstoff. Der Puffertank (5) steht üblicherweise unter Druck und enthält Wasserstoff-Produktgas mit einer geringen Sauerstoffkonzentration aus der Elektrolyse, also Wasserstoff-Produktgas mit einer guten Qualität und entsprechend geringer Fremdgaskonzentration. Der Puffertank 5 ist über die Zufuhrleitung 13a mit dem Gas-Separator 3 strömungstechnisch verbunden. In die Zufuhrleitung 13a ist ein Ventil 15a geschaltet, dass als Regelventil ausgestaltet ist. Mit der Ausgestaltung des Ventils 15a als Regelarmatur ist eine sehr genaue Dosierung der Gaszufuhr zum Gas-Separator 3 erreicht. Die Ventilposition des Ventils 15a ist mit einer hydraulischen oder elektromechanischen Ventilsteuerung ausgestattet und durch eine Ventil-Regeleinrichtung ansteuerbar. Eine Bypass-Leitung 19 zweigt von der Zufuhrleitung 13a ab und ist strömungstechnisch parallel zu der Zufuhrleitung 13a geführt, wobei die Bypass-Leitung 19 das Ventil 15a umgeht. In die Bypass-Leitung ist ein Absperrventil 17 geschaltet, welches als automatisches Absperrventil ausgeführt ist. Für die Strömung von Wasserstoff-Produktgas vom Gas-Separator 3 zum Puffertank 5 zu dessen Beladung im Normalbetrieb des Elektrolyseurs 1 ist mithin kein Ventil 17 mit Regelfunktion vorgesehen, was von Kostenvorteil ist. Die Druckeinstellung auf der Wasserstoffseite kann an anderer Stelle vorgenommen werden, etwa durch Einstellung des Drucks im Gas-Separator 3 ist ein Überströmen von Wasserstoff-Produktgas aus dem Gas-Separator 3 durch die Bypass-Leitung 19 in den Puffertank 5 auf einfache Weise erzielt. Für die bedarfsweise wohldosierte und geregelte Zufuhr bzw. Rückführung von Wasserstoff mit einer geringen Sauerstoffkonzentration, also guter Qualität, aus dem Puffertank 5 in den Gas-Separator 3 ist das Ventil 15a als Regelventil ausgeführt. Dieses Ventil 15a kann wegen der im allgemeinen erforderlichen geringeren Volumenströme zur Verdünnung entsprechend kleiner und kostengünstiger dimensioniert sein, insbesondere hinsichtlich des notwendigen Strömungsdurchmessers.

Im Betrieb wird nun bei einer kritischen Fremdgaskonzentration der Sauerstoffanteil im Wasserstoff-Produktgas, in dem dem Elektrolyseur 1 nachgeschalteten Gas-Separator 3, dadurch reduziert, dass dem Wasserstoff-Produktgas Wasserstoff besserer Qualität, das heißt mit einer geringen Sauerstoffkonzentration in gezielter und wohldosierter Weise zugeführt wird. Diese gezielte Zufuhr bewirkt dann im Gas-Separator 3 eine Mischung der Gase, wodurch eine Absenkung der Sauerstoffkonzentration erzielt wird. Die Sauerstoffkonzentration reduziert sich allein schon aufgrund des Effekts der Gasmischung und der Verdünnung des Sauerstoffs im Wasserstoff-Produktgas, der bei der Erfindung besonders vorteilhaft ausgenutzt wird. Somit ist ein Verwerfen des Wasserstoff-Produktgases im GasSeparator 3 vermieden, da es bei der hier vorgeschlagenen Prozedur in diesem Behälter verbleibt. Das Gasvolumen kann daher beim Wiederanfahren des Elektrolyseurs verwendet werden.

Indiziert nun eine Qualitätsmessung im Gas-Separator 3 eine schlechte Qualität, wird der Elektrolyseprozess angehalten. Anstatt nun das Gas im Gas-Separator 3 zu verwerfen, wird der Druck im Gas-Separator 3 nur soweit abgesenkt, dass aus dem Puffertank 5 wieder sauberes Wasserstoffgas dem Gas-Separator 3 zugeführt wird. Es wird solange sauberes Wasserstoffgas dem Gas-Separator 3 zugeführt, bis die Gasqualität gut ist, das heißt die Sauerstoffkonzentration ist kleiner als der vorbestimmte Grenzwert.

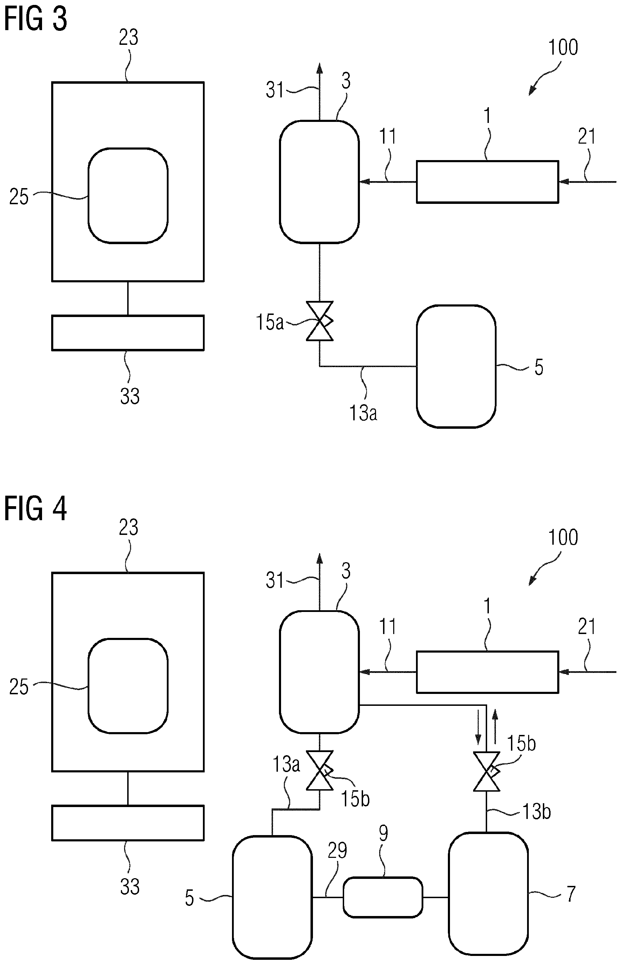

In einer weiteren vorteilhaften Ausgestaltung der Elektrolyseanlage 100 gemäß FIG 3 ist gegenüber der FIG 2 sogar die Bypass-Leitung 19 entbehrlich. Hierzu ist in der Zufuhrleitung 13a das Ventil 15a als ein in beide Richtungen durchströmbares Regelventil ausgestaltet, also eine bidirektionale Regelarmatur eingesetzt. Die bidirektionale Ausführung des Ventils 15a als ein Regelventil erlaubt eine besonders flexible Betriebsweise und Betriebsartwechsel mit einer Beladung des Puffertanks 5 einerseits in einem Normalbetrieb des Elektrolyseurs 1, bei dem Wasserstoff-Produktgas dem Puffertank zuführbar und dieser beladbar ist. Andererseits ist bedarfsweise im Abschaltbetrieb des Elektrolyseurs 1 dem GasSeparator 3 Wasserstoff-Produktgas in der Gegenrichtung zuführbar.

FIG 4 zeigt in einer weiteren besonders vorteilhaften Ausgestaltung und flexiblen Weiterbildung der Erfindung, dass ein in einer Gasreinigungsstufe gewonnener Wasserstoff hoher Reinheit über eine Zufuhrleitung 15b dem Gas-Separator 3 zuführbar ist. Hierzu ist ein zweiter Puffertank 7 mit Wasserstoff hoher Reinheit bereitgestellt und in die Elektrolyseanlage 100 integriert. Der zweite Puffertank 7 ist über eine Leitung 29 an den Puffertank 5 angeschlossen und dem Puffertank 5 strömungstechnisch nachgeschaltet. In die Leitung 29 ist ein Rekombinator 9 integriert, eine so genannte DeOxo-Einheit, wo ein Gasreinigungsschritt an dem Wasserstoff-Produktgas aus dem Puffertank 5 durchführbar ist. Hierzu wird der Wasserstoff-Produktstrom dem Rekombinator 3 zugeführt, der als Katalysatormaterial Platin oder Radium enthält. Der Katalysator ist dabei vorteilhafterweise auf einem keramischen oder metallischen Träger aufgebracht. Im Rekombinator 3 lässt der Katalysator den Wasserstoff mit dem Sauerstoff rekombinieren, so dass Wasser entsteht. Der Produktstrom wird anschließend in einer nicht näher dargestellten Kühlvorrichtung gekühlt, da die Reaktion im Rekombinator 3 exotherm verläuft. Der zweite Puffertank 7 ist dadurch mit Wasserstoff besonders hoher Reinheit bzgl. Fremdgasverunreinigung mit Sauerstoff beladbar, da die Gasqualität nach der katalytischen Gasreinigung im Rekombinator 9 deutlich verbessert ist. Um den Rekombinationsprozess zu kontrollieren, werden im gezeigten Ausführungsbeispiel vorzugsweise ein Druck p und eine Temperatur T des Wasserstoff-Produktgases sowohl am Eintritt als auch am Austritt des Rekombinators 3 erfasst und einer nicht näher dargestellten Kontrolleinheit zugeführt.

Da nach dem Gasreinigungsprozess die Gasqualität deutlich besser ist, wird weniger Volumenstrom für die Zufuhr von Wasserstoff aus dem zweiten Puffertank 7 in den Gas-Separator 3 benötigt, um den gewünschten Verdünnungseffekt im GasSeparator 3 hinsichtlich der gewünschten Reduzierung der Sauerstoffkonzentration unter den vorbestimmten Grenzwert zu erzielen. Entsprechend ist gemäß in FIG 4 die Leitung 29 als Verbindung zwischen Gas-Separator 3 und dem gereinigten Wasserstoff im zweiten Puffertank 7 vorgesehen.

In die Leitung 29 ist ein Ventil 15b geschaltet, das als Regelarmatur ausgestaltet ist. Dadurch kann unabhängig davon, ob sich die Gasqualität sprunghaft oder graduell ändert und auch unabhängig von Zeitskalen, in denen dieser Zustand auftritt oder anhält, eine betriebliche Unterbrechung vermieden werden. So wird zeitlicher Raum für eine flexiblere Serviceplanung geschaffen, insbesondere sind Service- und Wartungsarbeiten, die von Zeit zu Zeit an der Elektrolyseanlage 1 durchzuführen sind, besser planbar.

Auch für die Verbindung von Gas-Separator und dem Puffertank 3 bedeutet dies eine höhere konstruktive Flexibilität der Anlagenauslegung der Elektrolyseanlage 100 dergestalt, dass das Ventil 15 a nun entweder in einer kostengünstigen Variante als Absperrventil ausgeführt sein kann (siehe FIG 1). In diesem Fall sollte bevorzugt und unabhängig vom Fehlerverlauf, der die verschlechterte Gasqualität ausgelöst, sei es ein sprunghaftes oder graduelles, einmaliges oder länger anhaltendes Überschreiten des Grenzwerts der Sauerstoffkonzentration, die Verdünnung des Wasserstoff-Produktgases im GasSeparator 3 über den zweiten Puffertank 5 nach dem Gasreinigungsschritt im Rekombinator 7 erfolgen.

In alternativer und weiter bevorzugter Ausgestaltung kann die Armatur in der Zufuhrleitung 13a zwischen Gas-Separator 3 und Puffertank 5 auch entsprechend FIG 2 oder FIG 3 ausgeführt werden und ermöglicht somit viele Freiheitsgrade und Handlungsoptionen für eine auf den Fehlerfall angepasste Betriebsführung.

Als besonderer wirtschaftlicher Vorteil erweist sich, dass das Stickstoff-System 23 durch die vorgeschlagene Anlagenkonzept für die Elektrolyseanlage 100 deutlich kompakter gestaltet werden kann. Mit dem Konzept ist es ausreichend, lediglich noch den kontinuierlichen Stickstoffverbrauch für den so genannten Kompressorbetrieb bereitzustellen.

Die Menge an Stickstoff, die für Servicezwecke des Gas-Separators 3 benötigt wird, kann beispielsweise über Stickstoff-Flaschenbündel bereitgestellt werden oder über einen Stickstofftank, der zwar wie bisher durch das Volumen des Gas-Separators 3 bestimmt ist, allerdings nunmehr sehr langsam während des Normalbetriebs gefüllt werden kann. Dies insbesondere deswegen, da Wartungsarbeiten besser geplant werden können und da die herkömmliche Vorgehensweise einer doppelten Vorhaltung des bei Bedarf erforderlichen Stickstoffvolumens für den Fall einer (erneuten) Fehlerabschaltung während der Inbetriebnahme oder kurz danach nicht mehr notwendig ist. Dieser Fehlerfall kann mit der oben beschriebenen Verfahrensweise sehr wirtschaftlich behandelt werden.

## Patentansprüche

1. Verfahren zum Betrieb einer Elektrolyseanlage (100) zur Erzeugung von Wasserstoff und Sauerstoff als Produktgase, bei dem das Wasserstoff-Produktgas aus einem Elektrolyseur (1), welches auch Sauerstoff als Fremdgas enthält, einem nachgeschalteten Gas-Separator (3) zugeführt wird, wobei bei Überschreiten eines vorbestimmten Grenzwerts für die Sauerstoffkonzentration im Wasserstoff-Produktgas dem GasSeparator (3) Wasserstoff mit einer geringen Sauerstoffkonzentration zugeführt wird, so dass die Sauerstoffkonzentration im Wasserstoff-Produktgas abgesenkt wird.

2. Verfahren nach Anspruch 1, bei dem der Druck in dem GasSeparator (3) derart abgesenkt wird, dass aufgrund einer dadurch erzielten Druckdifferenz Wasserstoff mit einer geringen Sauerstoffkonzentration in den Gas-Separator (3) einströmt.

3. Verfahren nach Anspruch 1 oder 2, bei dem die Sauerstoffkonzentration in dem Gas-Separator (3) gemessen wird.

4. Verfahren nach einem der Ansprüche 1, 2 oder 3, bei dem bedarfsweise der Wasserstoff mit geringer Sauerstoffkonzentration einem Puffertank (5) entnommen wird.

5. Verfahren nach einem der vorhergehenden Ansprüche, wobei dem Puffertank (5) Wasserstoff-Produktgas mit einer Sauerstoffkonzentration unterhalb des vorbestimmten Grenzwerts für die Sauerstoff-Konzentration zugeführt wird.

6. Verfahren nach einem der vorhergehenden Ansprüche, wobei dem Puffertank (5) Wasserstoff-Produktgas aus dem GasSeparator (3) zugeführt wird.

7. Verfahren nach einem der vorhergehenden Ansprüche 1 bis 3, bei dem Wasserstoff hoher Reinheit aus einem zweiten Puffertank (7) entnommen und dem Gas-Separator (3) zugeführt wird.

8. Verfahren nach Anspruch 7, bei dem Wasserstoff mit geringer Sauerstoffkonzentration aus dem Puffertank (3) einem Rekombinator (9) zugeführt wird, der einen Katalysator enthält, so dass der Sauerstoff mit dem Wasserstoff zu Wasser rekombiniert, wobei Wasserstoff hoher Reinheit gewonnen wird, mit dem der zweite Puffertank (7) beladen wird.

9. Verfahren nach einem der vorhergehenden Ansprüche, bei dem die Erzeugung von Wasserstoff und Sauerstoff in dem Elektrolyseur (3) angehalten wird.

10. Elektrolyseanlage (100) umfassend einen Elektrolyseur (1) zur Erzeugung von Wasserstoff und Sauerstoff als Produktgase, bei dem das Wasserstoff-Produktgas auch Sauerstoff als Fremdgas enthält, wobei der Elektrolyseur (1) über eine Produktstrom-Leitung (11) für das Wasserstoff-Produktgas an einen Gas-Separator (3) angeschlossen ist und der Gas-Separator (3) über eine Zufuhrleitung (13a) an einen Puffertank (5), der zur bedarfsweisen Zufuhr von Wasserstoff mit einer geringen Sauerstoffkonzentration zu dem Gas-Separator (3) ausgestaltet ist.

11. Elektrolyseanlage (100) nach Anspruch 10, umfassend ein in die Zufuhrleitung (13a) geschaltetes Ventil (15a), insbesondere ein Regelventil.

12. Elektrolyseanlage (100) nach Anspruch 10 oder 11, mit einer ein Absperrventil (17) aufweisenden Bypassleitung (19), die von der Zufuhrleitung (13a) abzweigt und strömungstechnisch parallel der Zufuhrleitung (13a) derart geschaltet ist, dass die Bypassleitung (19) das Ventil (15a) umgeht.

13. Elektrolyseanlage (100) nach einem der Ansprüche 11 oder 12, wobei das Ventil (15a) als ein in beide Richtungen durchströmbares Regelventil ausgestaltet ist.

14. Elektrolyseanlage (100) nach einem der Ansprüche 10 bis 13, umfassend einen zweiten Puffertank (7), der über eine Leitung (29) mit dem Puffertank (5) verbunden ist, wobei in die Leitung (29) ein Rekombinator (9) geschaltet ist, der einen Katalysator enthält, so dass der Sauerstoff mit dem Wasserstoff zu Wasser rekombinierbar und Wasserstoff hoher Reinheit zur Beladung des zweiten Puffertanks (7) gewinnbar ist.

15. Elektrolyseanlage (100) nach Anspruch 14, wobei der zweite Puffertank (7) über eine Zufuhrleitung (13b) an den Gas-Separator (3) angeschlossen ist, so dass bedarfsweise eine Zufuhr von Wasserstoff hoher Reinheit aus dem zweiten Puffertank (7) zu dem Gas-Separator (3) erzielbar ist.

16. Elektrolyseanlage (100) nach Anspruch 15, wobei in die Zufuhrleitung (13b) ein Ventil (15B) geschaltet ist, das insbesondere als Regelventil ausgestaltet ist.
